(19) Europäisches Patentamt
European Patent Office
Office européen des brevets

(11) **EP 1 695 887 B1**

(12) **FASCICULE DE BREVET EUROPEEN**

(45) Date de publication et mention de la délivrance du brevet:
**10.06.2009 Bulletin 2009/24**

(51) Int Cl.:
***B60T 13/74*** *(2006.01)*    ***B60T 8/17*** *(2006.01)*

(21) Numéro de dépôt: **06290301.8**

(22) Date de dépôt: **22.02.2006**

(54) **Procédé d'asservissement dans un système de freinage de véhicule à freins électriques**

Method of actuating the electric brake system of a vehicle

Verfahren zur Steuerung des elektrischen Bremssystem eines Fahrzeugs

(84) Etats contractants désignés:
**DE ES FR GB IT**

(30) Priorité: **25.02.2005 FR 0501935**

(43) Date de publication de la demande:
**30.08.2006 Bulletin 2006/35**

(73) Titulaire: **MESSIER-BUGATTI**
**78140 Vélizy Villacoublay (FR)**

(72) Inventeur: **Thibault, Julien**
**91120 Palaiseau (FR)**

(74) Mandataire: **Parzy, Benjamin Alain et al**
**Cabinet Boettcher**
**22, rue du Général Foy**
**75008 Paris (FR)**

(56) Documents cités:
**EP-A- 1 186 495**    **US-A1- 2001 030 462**
**US-A1- 2004 232 762**    **US-B1- 6 178 369**

## Description

L'invention concerne un procédé d'asservissement dans un système de freinage à freins électriques.

ARRIERE-PLAN DE L'INVENTION

Les aéronefs modernes comprennent un système de freinage comportant des freins électriques munis d'actionneurs électromécaniques.

Chacun des actionneurs comporte un poussoir déplacé en regard d'une pile de disques sous l'action d'un moteur électrique pour appliquer sélectivement sur la pile de disques un effort de freinage:

On sait que de tels freins sont en général pilotés en effort par l'intermédiaire d'une consigne de freinage.

L'invention s'applique plus particulièrement aux actionneurs munis d'un capteur de position du poussoir, mais ne comportant pas de capteur d'effort capable de mesurer l'effort appliqué par le poussoir sur la pile de disques.

Dans ce cas, l'asservissement en effort des actionneurs nécessite d'estimer l'effort appliqué par le poussoir en fonction de paramètres mesurables, tels que la position du poussoir, ou encore le courant d'alimentation du moteur électrique.

A contrario, on peut convertir la consigne de freinage en une consigne de position et procéder à un asservissement en position.

L'asservissement mis en oeuvre dépend en général de paramètres, de relations, de modèles qui sont estimés à priori. Cependant, les conditions de fonctionnement du frein peuvent changer lors de la vie du frein, ce qui rend l'asservissement moins précis.

Il est connu, notamment du document US 6 178 369, d'ajuster une relation entre la consigne de freinage et la consigne de position pour tenir compte des conditions de fonctionnement du frein, et notamment de sa température ou de l'usure des disques. A cet effet, on fait fonctionner le frein dans des conditions pour lesquelles l'effort appliqué par le poussoir sur les éléments de friction dépend essentiellement d'un courant d'alimentation du moteur électrique, et, pour un ou plusieurs points de fonctionnement, on relève la position du poussoir et l'effort qu'il exerce. On utilise les couples position/effort ainsi relevés pour ajuster la relation par exemple par une méthode classique de régression.

OBJET DE L'INVENTION

L'invention a pour objet une mise en oeuvre particulière du principe général évoqué ci-dessus.

BREVE DESCRIPTION DE L'INVENTION

En vue de la réalisation de ce but, on propose un procédé d'asservissement dans un système de freinage de véhicule comportant au moins un frein électrique muni d'au moins un actionneur électromécanique comportant un poussoir déplacé sous l'action d'un moteur électrique en regard d'éléments de friction pour appliquer sélectivement un effort sur les éléments de friction en réponse à une consigne de freinage, le procédé faisant appel à une relation pour transformer une consigne d'effort à appliquer par le poussoir sur les éléments de friction en une consigne de position du poussoir, le procédé comportant les étapes de:

- faire fonctionner le frein dans des conditions pour lesquelles l'effort appliqué par le poussoir sur les éléments de friction dépend essentiellement d'un courant d'alimentation du moteur électrique;
- pour au moins un point de fonctionnement donné, relever une position et un courant correspondant, et déduire du courant ainsi relevé un effort correspondant ;
- utiliser la position et l'effort ainsi déterminés pour ajuster la relation entre la consigne de position et la consigne d'effort.

Selon l'invention, lesdites conditions de fonctionnement comportent l'imposition au poussoir d'un ou de plusieurs paliers en position.

BREVE DESCRIPTION DES DESSINS

L'invention sera mieux comprise à la lumière de la description qui suit en référence aux figures des dessins annexés parmi lesquelles :

- la figure 1 est une vue en coupe d'un frein électrique à actionneurs électromécaniques ;
- la figure 2 est une vue schématique de l'asservissement utilisé pour la commande des actionneurs ;
- la figure 3A est un graphe illustrant, en fonction du temps, les évolutions de la position (en trait épais) et du courant d'alimentation (en trait fin) selon le procédé de l'invention ;
- la figure 3B est un graphe illustrant l'ajustement de la relation entre l'effort et la position du poussoir selon le procédé de l'invention ;
- la figure 4 est un graphe illustrant, en fonction du temps, les évolutions d'une consigne de position utilisée dans le cadre d'un premier mode de mise en oeuvre du procédé de l'invention ;
- la figure 5A est un graphe illustrant, en fonction du temps, les évolutions d'une consigne de position utilisée dans le cadre d'un deuxième mode de mise en oeuvre du procédé de l'invention;
- la figure 5B est un graphe illustrant, en fonction du temps, les évolutions du courant d'alimentation de l'actionneur en relation avec la consigne de position de la figure 5A.

DESCRIPTION DETAILLEE DE L'INVENTION

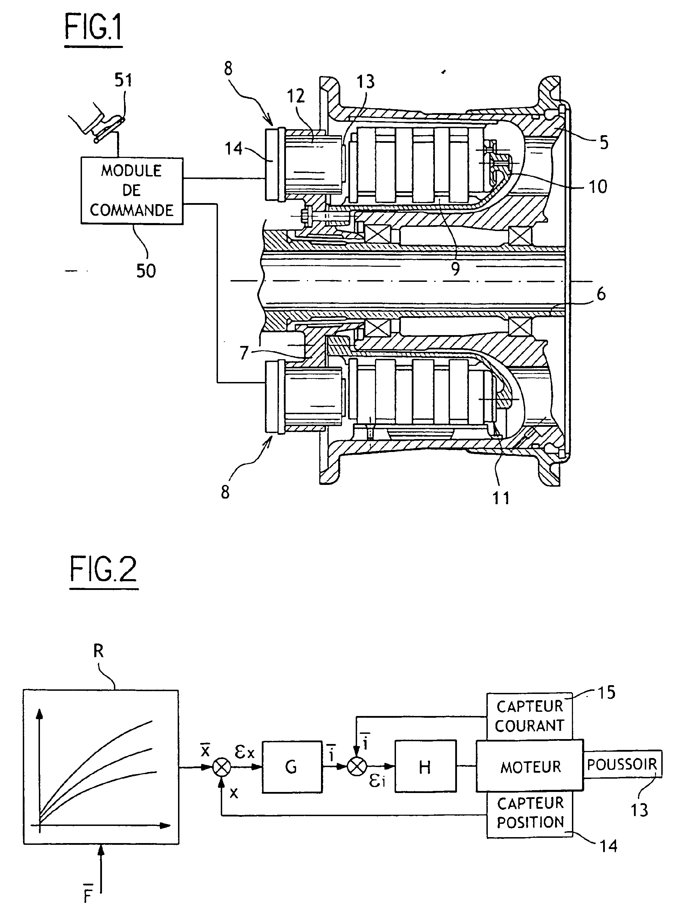

Le procédé de l'invention est détaillé ici en application à un aéronef qui comporte un certain nombre de roues freinées telles que celle illustrée à la figure 1. Chacune des roues freinées comporte une jante 5 adaptée à recevoir un pneumatique (non représenté ici) et montée à rotation sur un essieu 6 porté par l'un des atterrisseurs 15 de l'aéronef. Sur l'essieu 6 est montée une couronne 7 portant des actionneurs 8. Sur la couronne 7 est fixé un tube de torsion 9 qui s'étend dans la jante 5 pour se terminer par un appui 10. La couronne 7, et donc le tube de torsion 9, sont arrêtés en rotation vis à vis de l'essieu 6 par des moyens d'arrêt non représentés ici.

Entre l'appui 10 et les actionneurs 8 s'étend une pile de disques 11 composée de rotors qui sont solidaires en rotation de la jante 5 et de stators qui sont solidaires en rotation du tube de torsion 9.

Chacun des actionneurs 8 comporte un corps 12 dans lequel un poussoir 13 est monté pour se déplacer linéairement en regard de la pile de disques 11 sous l'action d'un moteur électrique contenu dans le corps 12, afin d'appliquer sélectivement sur la pile de disques 11 un effort qui, en induisant des efforts de friction entre les rotors et les stators de la pile de disques, contribue à ralentir la rotation de la jante 5, et donc à freiner l'aéronef. Chacun des actionneurs 8 comporte un capteur de position 14 pour mesurer les déplacements li"néaires du poussoir 13.

Les actionneurs 8 sont associés à un module de commande 50 pouvant fonctionner selon un mode commandé dans lequel chaque poussoir 13 est déplacé vis à vis de la pile de disques 11 par le moteur électrique, associé en réponse à une consigne de freinage qui est générée notamment à partir de signaux provenant de pédales de frein 51 actionnées par le pilote.

Dans ces actionneurs, le couple imposé par le moteur à l'ensemble motoréducteur permettant de transformer le mouvement de rotation du moteur en un mouvement de translation du poussoir 13 est directement proportionnel à l'intensité du courant d'alimentation du moteur. On peut écrire :

$$\texttt{Cem=K.i,}$$

où Cem est le couple électromagnétique, K un coefficient de proportionnalité, et $\underline{i}$ le courant d'alimentation du moteur électrique.

Cependant, le couple électromagnétique Cem ne se retrouve pas entièrement dans l'action du poussoir 13 contre la pile de disques. En effet, une partie du couple électromagnétique Cem est consommée pour contrer les effets d'inertie (accélérations ou décélérations du poussoir et des masses mobiles associées). Une autre partie du couple électromagnétique Cem est consommée pour compenser les frottements solides et les frottements visqueux (c'est-à-dire dépendant de la vitesse) s'opposant au déplacement du poussoir 13. On peut écrire :

$$\texttt{Cem = Ci + Cfs + Cfv + Cu,}$$

où :

Ci est le couple inertiel ;
Cfs est le couple de frottement solide ;
Cfv est le couple de frottements visqueux ;
Cu est le couple utile.

Le couple utile donne lieu à un effort F tel que cu=a.η.F, où a est un coefficient de transmission directement lié à la géométrie de l'ensemble motoréducteur, et η le rendement de cette transmission.

Le module de commande 50 est adapté à mettre en oeuvre un asservissement des actionneurs tel qu'illustré à la figure 2.

La consigne de freinage $\overline{F}$ est tout d'abord transformée en une consigne de position $\overline{x}$. A cet effet, on utilise une relation R entre la position du poussoir 13 et l'effort exercé par le poussoir 13 sur la pile de disques 11.

Cette consigne $\overline{x}$ forme l'entrée d'une boucle de rétroaction en position. A cette consigne est retranchée la position x du poussoir 13 telle que mesurée par le capteur de position 14.

L'écart $\varepsilon_x$ ainsi formé est traité par une première fonction de transfert G, ici du type PID, pour être transformé en une consigne de courant $\overline{i}$. Cette consigne forme l'entrée d'une boucle interne de rétroaction en courant. A cette consigne est retranchée le courant i tel que mesuré par le capteur de courant 15 qui est ici intégré au module de commande 50.

L'écart $\varepsilon_i$ ainsi formé est alors traité par une fonction de transfert H (ici un PID), puis est fourni au moteur électrique de l'actionneur.

On a constaté que la relation R entre la position et l'effort exercé par le poussoir est particulièrement sensible à l'usure des disques. L'invention a précisément pour objet d'ajuster cette relation R pour tenir compte de cette usure.

A cet effet, on estime des efforts $F_p$ correspondant à une pluralité de positions $x_p$ du poussoir, et on utilise les couples $(x_p, F_p)$ ainsi estimés pour ajuster la relation R entre la position et l'effort, par exemple au moyen d'une régression connue en soi.

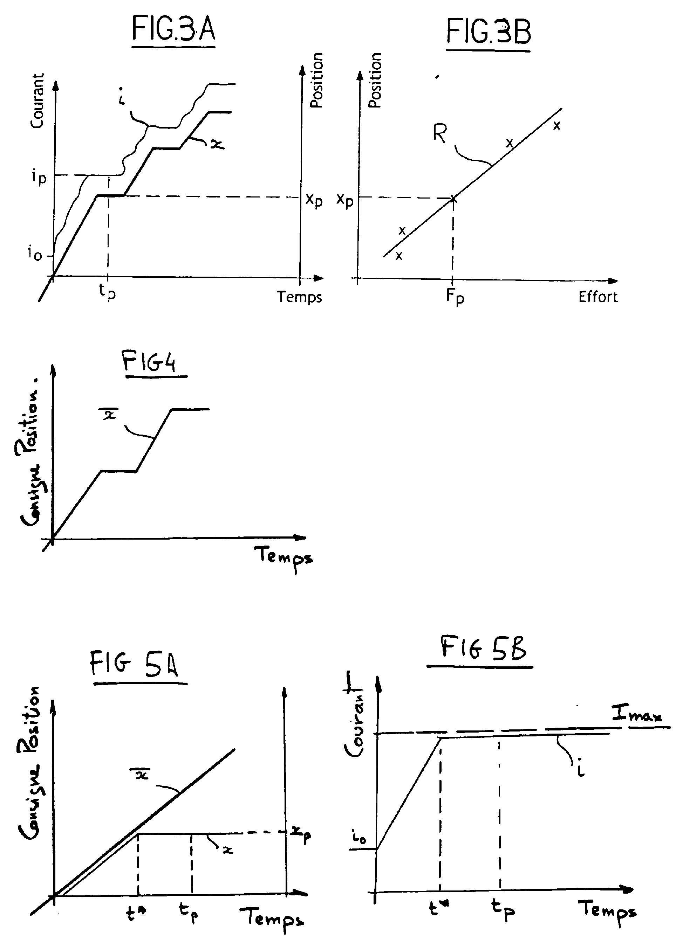

Conformément à l'invention, et comme cela est illustré aux figures 3A et 3B, on fait tout d'abord avancer le poussoir 13 à vitesse constante.

La vitesse étant maintenue constante, les effets d'inertie sont nuls, de sorte que le couple Ci est nul. Par ailleurs, on prend soin de maintenir la vitesse suffisamment faible de sorte que le couple de frottements visqueux Cfv reste toujours négligeable.

Sur le graphe 3A, la courbe en traits épais illustrant les positions du poussoir 13 prend alors la forme d'une droite, l'origine des temps étant prise au moment du contact du poussoir 13 avec la pile de disques 11.

Lors d'une première phase où le poussoir 13 n'est pas en contact avec la pile de disques, le couple utile Cu est nul, de sorte que l'intégralité du couple électromagnétique développé par le moteur sert à vaincre les frottements solides. En mesurant le courant d'alimentation $i_0$ dans cette situation, on obtient une mesure des frottements solides :

$$Cf = K.i_0.$$

Le courant $i_0$ est visible sur la courbe de courant en trait fin. C'est le courant constant vu par le moteur avant le contact du poussoir 13 avec la pile de disques 11.

Lors d'une deuxième phase où le poussoir 13 est en contact avec la pile de disques 11, le couple utile n'est plus nul et peut se déduire directement de la mesure du courant i :

$$Cu = K.(i-i_0).$$

Conformément au principe général de l'invention, on imprime au poussoir 13 un déplacement avec un certain nombre de paliers lors desquels le poussoir 13 reste immobile. Sur le graphe de la figure 3A, on aperçoit, pour un instant $t_p$ pris lors de l'un de ces paliers, la position $x_p$ et le courant $i_p$ correspondants.

Lorsque le poussoir est stabilisé en position, on relève la position $x_p$ ainsi que le courant d'alimentation $i_p$ correspondant. Dans ces conditions, le couple inertiel Ci et le couple de frottements visqueux Cfv sont nuls, de sorte que l'effort appliqué peut se déduire directement du courant par la relation:

$$F_p = K.(i_p-i_0)/a\eta.$$

En répétant ces mesures plusieurs fois, et en associant à chaque courant mesuré $i_p$ un effort $F_p$ selon la relation explicitée ci-dessus, on obtient une série de couples $(x_p, F_p)$ illustrés par des croix sur le graphe de la figure 3B. Ces couples sont utilisés selon l'invention pour ajuster la relation R utilisée dans l'asservissement entre la consigne de position et la consigne d'effort, selon un procédé de régression classique.

L'estimation de l'effort à partir du courant est susceptible de diverses variantes.

Dans une première variante, on prend soin de se placer dans des positions pour lesquelles le couple utile Cu est bien plus grand que le couple de frottement solide Cf, donc pour lesquelles le courant d'alimentation $i_p$ est bien plus grand que le courant $i_0$, de sorte que celui-ci peut être négligé. On peut alors estimer un effort $F_p$ correspondant à l'aide de la mesure du courant d'alimentation $i_p$ par la relation :

$$F_p = K.i_p/a.\eta$$

Dans une autre variante, on fait avancer le poussoir à vitesse constante mais cependant importante, pour gagner du temps. Dans ce cas, les frottements visqueux ne peuvent plus être négligés, mais sont intégrés dans le courant $i_0$.

Le principe général de l'invention étant exposé, on va maintenant décrire des modes particuliers de mise en oeuvre de l'invention.

Conformément à un premier mode de mise en oeuvre illustré à la figure 4, les paliers de position sont obtenus en utilisant une consigne de position $\bar{x}$ comportant des paliers.

A chacun des paliers ainsi commandés, la position, le courant et l'effort exercé par le poussoir se stabilisent. Cette stabilisation est facilement repérée en suivant les évolutions du signal du capteur de position de l'actionneur. Il suffit dès lors de relever la position et le courant correspondant pour obtenir un couple $(x_p, i_p)$. En déduisant l'effort du courant mesuré comme indiqué ci-dessus, on obtient finalement un couple $(x_p, F_p)$.

On notera que la consigne de position $\bar{x}$ comporte une portion initiale de déplacement du poussoir à vitesse constante, ce qui permet de relever le courant $i_0$.

En pratique, si l'actionneur peut être asservi directement en position, il suffit alors d'utiliser la consigne de position $\bar{x}$ illustrée à la figure 4. Sinon, il suffit de transformer la consigne de position $\bar{x}$ en une consigne d'effort correspondante en utilisant la relation réciproque de la relation R.

Dans un deuxième mode de mise en oeuvre illustré à la figure 5A, on obtient les paliers de position en utilisant une consigne de position $\bar{x}$ qui augmente indéfiniment, à vitesse constante.

Comme cela est visible à la figure 5B, le courant d'alimentation nécessaire pour suivre la consigne de position $\bar{x}$ augmente de façon sensiblement linéaire à partir de l'instant de contact (pris à l'origine des temps sur le graphe) jusqu'à l'instant t* pour lequel le courant atteint le seuil de courant maximal disponible Imax.

Dès lors, le courant i se stabilise à la valeur Imax, ce qui implique un arrêt du poussoir, comme cela est visible à la figure 5A, et donc un palier en position de celui-ci.

Quand la position d'arrêt du poussoir est stabilisée, on relève la position $x_p$ correspondante. Le courant $i_p$ est bien sûr le courant Imax. En déduisant l'effort du courant, on obtient finalement un couple $(X_p, F_p)$.

En pratique, le seuil de courant maximal disponible découle:

- soit de limitations structurelles de l'alimentation de sorte que le courant maximal disponible est le courant maximal que l'alimentation est capable de développer;
- soit d'une limitation logicielle qui limite le courant utilisable par l'actionneur à un niveau choisi (bien sûr inférieur ou égal au courant maximal développable), ce qui permet de réaliser plusieurs paliers, en sélectionnant plusieurs niveaux de courant maximal disponible.

Bien sûr, on imposera au poussoir le nombre de paliers en position nécessité par le nombre de couples à acquérir pour ajuster la relation R. Ainsi, on peut se contenter d'un palier si la relation R ne dépend que d'un seul paramètre qui peut être déterminé au moyen du seul couple $(X_p, F_p)$ mesuré au moyen de l'unique palier effectué. Cependant, et de préférence, on réalisera plusieurs paliers.

Cet ajustement permet, dans un cas, d'éviter une surpression inutile sur la pile de disques, fatiguant inutilement le frein et usant prématurément les disques, et, dans l'autre cas, une application insuffisante d'effort menant à des performances de freinage dégradées.

L'invention n'est pas limitée à ce qui vient d'être décrit, mais bien au contraire englobe toute variante entrant dans le cadre défini par les revendications.

En particulier, l'ajustement selon l'invention est de préférence mise en oeuvre au moment de la sortie des atterrisseurs avant l'atterrissage de l'aéronef. Ainsi, la relation R entre la consigne de position et la consigne d'effort est réajustée avant chaque atterrissage pour tenir compte de l'état d'usure des disques. Cependant, l'étape d'ajustement peut être mise en oeuvre dans d'autres circonstances, par exemple en réponse au franchissement d'un seuil d'usure des éléments de friction, ou encore de façon périodique une fois tous les 10 ou 100 vols, lors d'un remplacement des éléments de friction, ou encore lors d'une maintenance en atelier.

Bien que la consigne de freinage soit ici une consigne d'effort, il est également possible d'appliquer l'invention à une consigne exprimée en pourcentage d'un effort maximal.

## Revendications

1. Procédé d'asservissement dans un système de freinage de véhicule comportant au moins un frein électrique muni d'au moins un actionneur (8) comportant un poussoir (13) déplacé sous l'action d'un moteur électrique en regard d'éléments de friction (11) pour appliquer sélectivement un effort sur les éléments de friction en réponse à une consigne de freinage, le procédé faisant appel à une relation (R) pour transformer une consigne de freinage à appliquer par le poussoir en une consigne de position du poussoir, le procédé comportant les étapes de:

- faire fonctionner le frein dans des conditions pour lesquelles l'effort appliqué par le poussoir sur les éléments de friction dépend essentiellement d'un courant d'alimentation du moteur électrique;
- pour au moins un point de fonctionnement, relever une position $(x_p)$ du poussoir et le courant d'alimentation $(i_p)$ correspondant du moteur électrique , et déduire du courant relevé un effort correspondant $(F_p)$ ;
- ajuster la relation (R) entre la consigne de position et la consigne de freinage en fonction de la position et de l'effort ainsi déterminés ;

**caractérisé en ce que** les dites conditions de fonctionnement comportent l'imposition au poussoir d'un ou de plusieurs paliers en position.

2. Procédé selon la revendication 1, dans lequel le ou les paliers résultent de l'utilisation d'une consigne de position comportant des paliers.

3. Procédé selon la revendication 1, dans lequel le ou les paliers résultent de l'utilisation d'une consigne de position qui impose un déplacement du poussoir lors duquel le courant d'alimentation du moteur électrique atteint un niveau maximal de courant disponible.

4. Procédé selon la revendication 1, **caractérisé en ce que** l'on met en oeuvre l'étape d'ajustement au moins une fois par cycle d'utilisation du véhicule.

## Claims

1. A method of servo-controlling a vehicle brake system including at least one electric brake provided with an actuator comprising a pusher facing friction elements and driven by an electric motor to apply a force selectively against the friction elements in response to a braking setpoint, the method making use of a relationship for transforming a setpoint for the braking to be applied by the pusher into a setpoint for the position of the pusher, the method comprising the steps of:

operating the brake in conditions in which the force applied by the pusher against the friction elements depends essentially on a power supply current flowing through the electric motor; for at least one operating point, identifying a position of the pusher and the corresponding power supply current of the electric motor, and deducing a corresponding force from the measured current; and

adjusting the relationship between the position setpoint and the braking setpoint as a function of the position and the force as determined in this way;

wherein said operating conditions include imposing one or more position pauses on the pusher.

2. A method according to claim 1, in which the pause or pauses are the result of using a position setpoint including one or more pauses.

3. A method according to claim 1, in which the pause or pauses result from using a position setpoint that causes the pusher to be moved in such a manner that the power supply current of the electric motor reaches a maximum available current level.

4. A method according to claim 1, wherein the adjustment step is implemented at least once per utilization cycle of the vehicle.

**Patentansprüche**

1. Verfahren zur Regelung in einem Bremssystem eines Fahrzeugs, umfassend mindestens eine elektrische Bremse, die mit mindestens einem Aktuator (8) versehen ist, der einen Stößel (13) umfasst, der unter der Wirkung eines Elektromotors gegenüber Reibungselementen (11) verschoben wird, um selektiv eine Kraft auf die Reibungselemente in Antwort auf einen Bremssollwert auszuüben, wobei das Verfahren eine Beziehung (R) nutzt, um einen von dem Stößel aufzubringenden Bremssollwert in einen Positionssollwert des Stößels umzuwandeln, wobei das Verfahren die Schritte umfasst:

- Betreiben der Bremse unter Bedingungen, für die die von dem Stößel auf die Reibungselemente ausgeübte Kraft im Wesentlichen von einem Versorgungsstrom des Elektromotors abhängt,
- für mindestens einen Betriebspunkt, Ablesen einer Position ($x_p$) des Stößels und des entsprechenden Versorgungsstroms ($i_p$) des Elektromotors und Herleiten einer entsprechenden Kraft ($F_p$) aus dem abgelesenen Strom,
- Anpassen der Beziehung (R) zwischen dem Positionssollwert und dem Bremssollwert in Abhängigkeit von der so bestimmten Position und der so bestimmten Kraft,

**dadurch gekennzeichnet, dass** die genannten Betriebsbedingungen das Vorgeben einer oder mehrerer Positionsstufen für den Stößel umfasst.

2. Verfahren nach Anspruch 1, wobei die Stufe bzw. die Stufen aus der Verwendung eines Positionssollwertes resultieren, der Stufen umfasst.

3. Verfahren nach Anspruch 1, wobei die Stufe bzw. die Stufen aus der Verwendung eines Positionssollwertes resultieren, der eine Verschiebung des Stößels erfordert, während der der Versorgungsstrom des Elektromotors eine maximale Höhe des verfügbaren Stroms erreicht.

4. Verfahren nach Anspruch 1, **dadurch gekennzeichnet, dass** man den Schritt des Anpassens mindestens einmal pro Nutzzyklus des Fahrzeugs durchführt.

## FIG.1

## FIG.2

# FIG.3A

# FIG.3B

# FIG4

# FIG 5A

# FIG 5B

## RÉFÉRENCES CITÉES DANS LA DESCRIPTION

**Documents brevets cités dans la description**

- US 6178369 B